Europäisches Patentamt

European Patent Office

Office européen des brevets

(19)

(11) Numéro de publication : **0 006 374**
**B1**

(12) **FASCICULE DE BREVET EUROPÉEN**

(45) Date de publication du fascicule du brevet :
30.09.81

(51) Int. Cl.³ : **B 23 D 21/08**

(21) Numéro de dépôt : **79400354.1**

(22) Date de dépôt : **01.06.79**

(54) **Dispositif tendeur de chaînes et jeu de chaînes interchangeables pour couper ou serrer les tubes.**

(30) Priorité : **09.06.78 FR 7817722**

(43) Date de publication de la demande :
**09.01.80 (Bulletin 80/01)**

(45) Mention de la délivrance du brevet :
**30.09.81 Bulletin 81/39**

(84) Etats contractants désignés :
**AT BE CH DE FR GB IT LU NL SE**

(56) Documents cités :
**CH - A - 315 956**
**US - A - 2 629 925**

(73) Titulaire : **VIRAX S.A.**
**39/41, Quai de Marne**
**F-51200 Epernay (FR)**

(72) Inventeur : **Aubriot, Jean Louis Claude**
**33, rue de Tarbes**
**Damery F-51200 Epernay (FR)**

(74) Mandataire : **de Boisse, Louis**
**37, Avenue Franklin D. Roosevelt**
**F-75008 Paris (FR)**

Imprimerie Jouve, 17, rue du Louvre, 75001 Paris, France

EP 0 006 374 B1

## Dispositif tendeur de chaînes et jeu de chaînes interchangeables pour couper ou serrer les tubes

Le présent brevet se rapporte aux dispositifs coupe-tubes ou serre-tubes à chaîne, qui sont utilisés en plomberie sanitaire et en travaux publics, pour la coupe des tuyauteries servant à la réalisation des réseaux d'adduction d'eau, et d'évacuation d'eaux usées. Ces tuyauteries sont en matériaux assez divers, on rencontre en particulier la fonte grise ou ductile, l'acier, le grès, le béton, le fibro-ciment, le plastique.

Les coupe-tubes précédemment connus ne peuvent être équipés que pour la coupe d'une seule sorte de matériau, ce qui oblige à posséder différents coupe-tubes complets, ou à procéder à de longs montages et démontages pour équiper le coupe-tubes selon la nature du matériau à couper. D'autre part, les coupe-tubes utilisés pour la coupe des tubes en métal ferreux travaillent ordinairement par rotation de la chaîne de coupe, tandis que les coupe-tubes pour grès, béton ou fibro-ciment travaillent par éclatement du tube en pression pure, sans rotation. Les dispositifs de tension des chaînes sont donc différents, les efforts nécessités par la coupe en pression étant de beaucoup supérieurs à ceux nécessités par la coupe par rotation. Ceci fait qu'il est nécessaire de posséder au moins deux coupe-tubes et oblige donc à procéder à un investissement relativement important.

Ainsi le brevet suisse n° 315 956 décrit un coupe-tubes pour coupe par rotation. Cet appareil est basé sur le principe des ciseaux de Nuremberg. Le dispositif comporte un tube extérieur à l'extrémité duquel se trouve un étrier dans les branches duquel sont prévues des coulisses. Les extrémités de l'étrier portent des roulettes qui, lors du fonctionnement, prennent appui sur le tube à couper. Un système de bielles formant ciseaux de Nuremberg et portant les crochets de maintien de la chaîne est susceptible de se déformer sous l'action d'un axe entraîné dans les coulisses par une tige dont l'extrémité est maintenue dans une pièce creuse cylindrique filetée intérieurement, coulissant dans le tube extérieur. L'extrémité filetée de la pièce creuse coopère avec la tige du volant de manœuvre filetée extérieurement pour ouvrir ou fermer les ciseaux. Les caractéristiques de ce dispositif ne sont pas compatibles avec une utilisation pour la coupe en pression qui exige une faible course et un effort important.

Le coupe-tubes objet du présent brevet vise à remédier à ces inconvénients en utilisant un seul dispositif tendeur qui peut être équipé de différentes chaînes de coupe adaptées aux différents matériaux, la mise en place des différentes chaînes de coupe et l'accrochage sur le dispositif tendeur se faisant instantanément. De cette façon, un seul dispositif tendeur et un jeu de chaînes permettent de composer à volonté et instantanément un coupe-tubes adapté au matériau à couper.

La description qui va suivre, en regard des dessins qui y sont annexés, fera bien comprendre comment ladite invention peut être réalisée.

La figure 1 est une vue de face, en demi-coupe, du dispositif tendeur seul.

La figure 2 est une vue de côté en demi-coupe, du dispositif tendeur seul.

Les figures 3 et 3A montrent le coupe-tubes en place sur un tube à sectionner, muni du bras de manœuvre à cliquet et une variante de la rallonge de manœuvre.

La figure 4 montre les deux extrémités de la chaîne de coupe par rotation, l'extrémité de gauche étant représentée en coupe.

La figure 5 montre les deux extrémités de la chaîne de coupe par pression, l'extrémité de droite étant représentée en coupe.

La figure 6 montre les deux extrémités de la chaîne étau, l'extrémité de droite comportant une coupe partielle.

Sur ces dessins, les pièces semblables sont repérées par des références semblables.

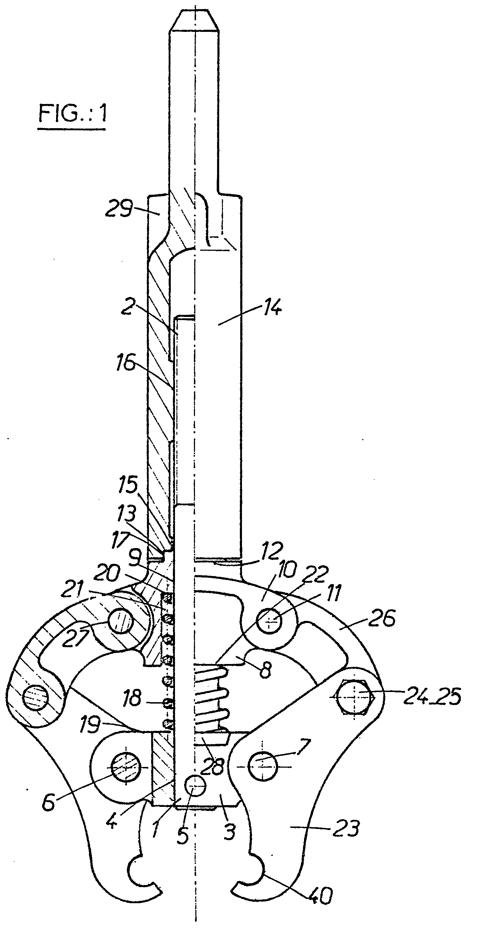

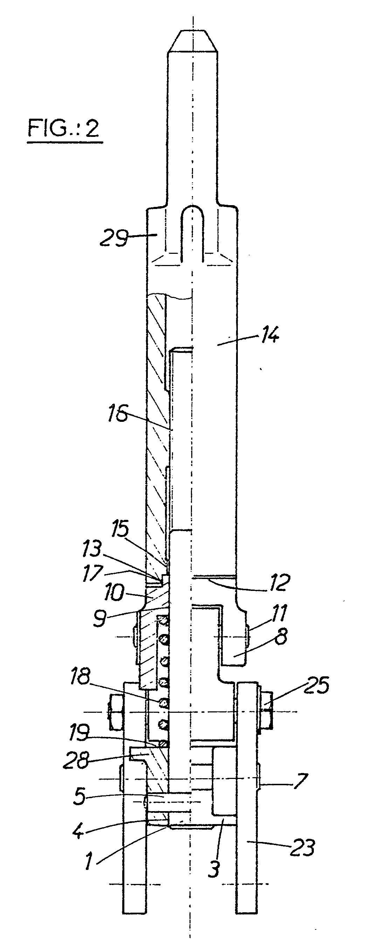

Comme le montrent les figures 1 et 2, le dispositif tendeur est constitué ainsi : une tige cylindrique 1 munie à son extrémité supérieure d'un filetage 2 est rendue solidaire à son extrémité inférieure d'un support 3 muni d'un alésage cylindrique 4 dans lequel est emmanchée à force l'extrémité de ladite tige 1, une goupille 5 traversant le support 3 et la tige 1 et les rendant ainsi solidaires. De part et d'autre de l'axe de la tige et perpendiculairement à cet axe, le support 3 comporte deux alésages 6 recevant chacun un axe 7 emmanché dur de façon à être immobilisé en rotation et en translation. Sur la tige 1 est enfilé un coulisseau 8 coopérant avec la tige 1 par son alésage 9 qui lui permet de coulisser librement sur la tige 1. De part et d'autre de l'axe de la tige 1 le coulisseau 8 comporte deux chapes 10. Ces chapes sont traversées chacune par un axe 11 emmanché dur de façon à être immobilisé en rotation et en translation par rapport au coulisseau 8. Sur la face supérieure 12 du coulisseau 8 est ménagé un épaulement cylindrique 13 concentrique par rapport à l'axe de la tige 1. Un manche 14 de forme générale cylindrique est muni à son extrémité inférieure d'un alésage 15 comportant un taraudage 16 coopérant avec le filetage 2 de la tige 1. Un autre alésage 17 de faible longueur coopère avec un épaulement 13 du coulisseau et assure le centrage du coulisseau par rapport au manche 14. Un ressort de compression 18 est enfilé sur la tige 1 avec ses extrémités respectivement en appui contre la face supérieure 19 du support 3 et la face 20 d'un embrèvement 21 débouchant à la face inférieure 22 du coulisseau. Cet embrèvement 21 est de longueur suffisante pour contenir le ressort 18 lorsqu'il est comprimé et permettre ainsi aux faces 19 et 22 de venir en contact. Sur les axes 7, à l'extérieur des supports 3 et de part et d'autre de ce support sont montés articulés quatre renvois 23, chaque axe portant deux renvois. La forme générale de ces renvois est celle d'une équerre, dont les branches sont orientées respectivement vers le haut et vers l'extérieur du tendeur. Sur chaque renvoi à l'extrémité de la branche orientée vers le haut est ménagé un alésage cylindrique 24. Cet alésage 24 reçoit un axe épaulé 25 qui réunit entre eux les deux renvois situés du même côté du support 3. Sur cet axe 25 et entre les deux renvois est montée libre en rotation une biellette 26. Cette biellette est d'autre part munie d'un alésage 27 coopérant avec l'axe 11 sur lequel elle est montée libre en rotation. L'ensemble du tendeur constitue donc un système déformable ; lorsque l'on visse le manche 14, celui-ci pousse le coulisseau 8 qui descend le long de la tige 1. Les renvois qui sont montés articulés sur les axes 7 fixes par rapport à la tige pivotent sous l'effet de la poussée transmise par les biellettes 26. Le support 3 comporte en sa partie centrale une partie en saillie 28 symétrique par rapport à l'axe de la tige 1 et contre laquelle viennent buter les renvois 23 situés de part et d'autre de l'axe de la tige 1 lorsque le tendeur est ouvert au maximum, c'est-à-dire lorsque l'on a dévissé le manche 14, de façon à éviter la mise en ligne des articulations du tendeur et donc le blocage de ce système déformable qui empêcherait de pouvoir resserrer le tendeur.

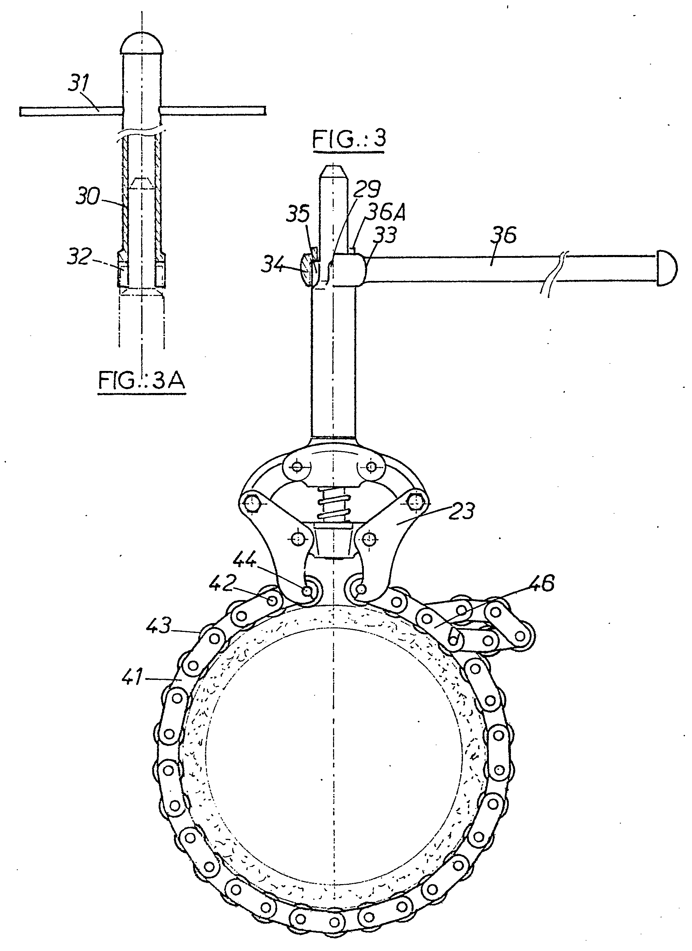

La forme extérieure du manche 14 est constituée de deux cylindres superposés, le cylindre supérieur étant de diamètre inférieur au cylindre inférieur. Le cylindre inférieur est prolongé par quatre bossages 29 disposés à 90° par rapport à l'axe du manche, formant lorsqu'on regarde ce manche par son extrémité supérieure, une croix autour du cylindre supérieur. Ces bossages servent à l'entraînement en rotation du manche lorsque l'on serre la chaîne de coupe sur le tube à couper. Comme le montrent les figures 3 et 3A, ce coupe-tubes peut en effet être manœuvré à l'aide d'un bras rallonge 30 muni d'une barre de manœuvre 31 et comportant à sa partie inférieure quatre encoches 32 disposées à 90°, reproduisant en creux le profil des bossages 29 et coopérant avec ceux-ci pour assurer la solidarisation en rotation du dispositif tendeur et du bras rallonge 30. Un autre bras de manœuvre 33 est également prévu. Ce bras 33 est composé d'un cliquet 34 comportant quatre dents de loup 35 disposées à 90° et coopérant avec les bossages 29 du manche, et d'un bras 36 destiné à la manœuvre et disposé perpendiculairement par rapport à l'axe du cliquet. A la partie supérieure du cliquet 34 sont ménagés deux bossages 36A disposés à 180°, destinés à coopérer, en faisant tourner le cliquet de 180° autour de l'axe du bras 36, avec les bossages 29 pour pouvoir éventuellement desserrer le coupe-tubes, ce que ne permet évidemment pas le cliquet 34 ne fonctionnant que dans un sens de rotation.

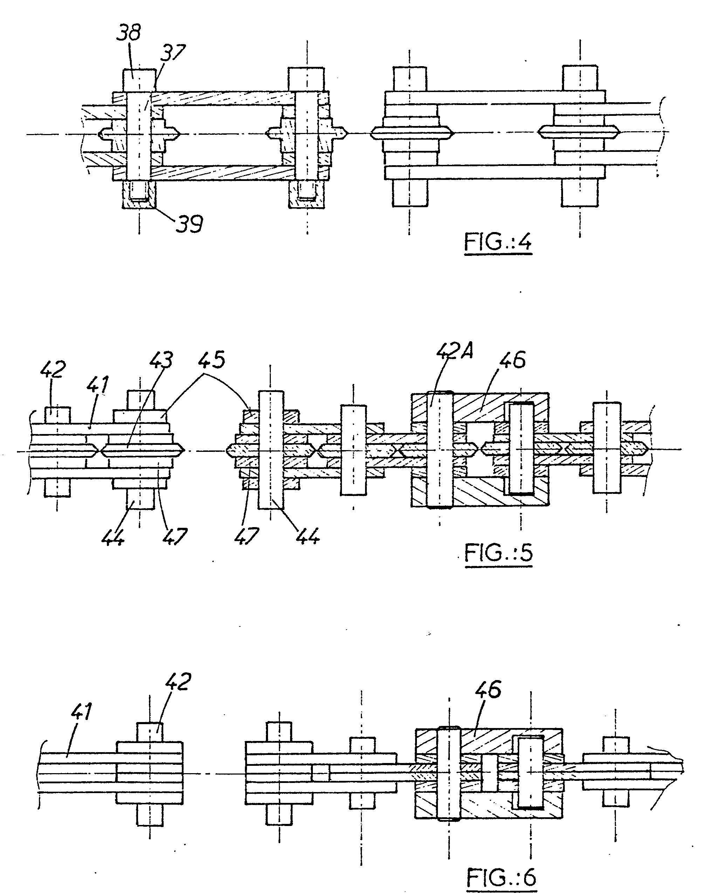

Ce coupe-tubes peut être équipé de différentes chaînes : pour coupe par pression, par rotation, ou étau. Comme le montre la figure 4, la chaîne de coupe par rotation est constituée de façon classique par des maillons articulés pivotant sur des axes 37 et entretoisés par les molettes de coupe. Cette disposition est déjà décrite dans FR-A-2371992 « Dispositif coupe-tubes à chaîne ». Une différence réside toutefois dans le mode d'accrochage des maillons. Dans le cas présent, les têtes 38 des axes 37 et les écrous 39 débordent largement de chaque côté de la chaîne et servent à l'accrochage. Les extrémités inférieures des renvois 23 sont réalisées en forme de crochet 40, et permettent l'accrochage de la chaîne sur n'importe quel axe de façon à pouvoir régler à volonté la longueur de la chaîne.

Comme le montre la figure 5, la chaîne de coupe par pression est constituée de maillons très courts 41 assemblés par des axes 42 dépassant de part et d'autre des maillons, et qui portent chacun une molette 43 qui assure également l'entretoisement des maillons. La longueur des maillons 41 est telle que les molettes sont presque tangentes. Les deux maillons d'extrémité portent chacun un axe terminal 44 de longueur et de diamètre suffisants pour assurer l'accrochage de la chaîne dans les crochets des renvois 23 du dispositif tendeur ; des rondelles entretoises 45 assurent éventuellement le positionnement de la chaîne dans ces crochets. D'autres rondelles 47 maintiennent l'écartement des maillons de part et d'autre de la molette. Afin de permettre le réglage en longueur de la chaîne, qui ne peut se faire comme pour la chaîne de coupe par rotation puisque seuls les axes des maillons d'extrémité sont prévus pour être accrochés au tendeur, un axe 42A situé le plus près possible d'une extrémité de la chaîne, porte deux crochets 46, montés articulés sur cet axe de chaque côté de la chaîne. En faisant prendre ces crochets sur un axe quelconque 42, il est possible de « court-circuiter » un certain nombre de maillons et donc de donner à la chaîne la longueur utile nécessaire pour pouvoir couper un tube de diamètre déterminé.

Comme le montre la figure 6 la chaîne de serrage est constituée des mêmes maillons 41 et des mêmes axes 42 que la chaîne de coupe. Le même dispositif de réglage de longueur, par raccourcissement de la chaîne en court-circuitant des maillons au moyen des crochets 46, est prévu. De cette façon, il est possible d'utiliser le dispositif en serre-tubes, ce qui est particulièrement utile lorsqu'on désire immobiliser un tube en rotation.

Le fonctionnement de ce coupe-tubes est le suivant. En fonction de la nature du tube à couper, le coupe-tubes est équipé de la chaîne idoine : chaîne de coupe par rotation pour la fonte ou l'acier ; chaîne de coupe par pression pour le fibro-ciment, le béton ou le grès ; ou éventuellement chaîne-étau pour immobiliser en rotation un tuyau de n'importe quelle matière. La chaîne est mise à la longueur voulue comme décrit ci-dessus. Puis l'opérateur actionne le dispositif tendeur au moyen du bras à cliquet 33 ou du bras rallonge 30. Le système articulé déformable qui constitue le tendeur transmet à la chaîne de coupe, en l'amplifiant, l'effort de serrage exercé par l'opérateur. De cet effort de serrage, conjugué éventuellement avec un mouvement de rotation en va-et-vient résulte la pénétration des molettes, jusqu'à sectionnement du tube.

## Revendications

1. Dispositif tendeur de chaînes et jeu de chaînes interchangeables pour couper ou serrer les tubes, comprenant une tige cylindrique (1) solidaire d'un support (3) et un coulisseau (8) relié au support (3) par des biellettes (26) et des renvois (23) dont la partie inférieure est ménagée en forme de crochet pour permettre l'accrochage de la chaîne, la tige cylindrique (1) coopérant avec un manche fileté (14), caractérisé en ce que les renvois (23) sont en forme d'équerre et sont articulés sur le support (3), et reliés par deux biellettes (26) au coulisseau, et en ce que le manche (14) coopérant avec la tige cylindrique filetée, est constitué d'au moins une partie cylindrique qui appuie à son extrémité inférieure contre la face supérieure (12) du coulisseau sur laquelle il peut tourner et porte à son extrémité supérieure quatre bossages (29) servant à son entraînement à l'aide d'un bras (30, 33).

2. Dispositif selon la revendication 1, caractérisé en ce que le manche (14) coopère avec un bras-rallonge comportant à sa partie inférieure quatre encoches (32) disposées à 90°, ou coopère avec un bras de manœuvre composé d'un cliquet comportant quatre dents de loup disposées à 90°, et d'un bras (36) disposé perpendiculairement par rapport à l'axe du cliquet ; deux bossages (36A) disposés à 180° étant ménagés à la partie supérieure du cliquet.

3. Dispositif selon la revendication 1 ou la revendication 2, caractérisé en ce que le réglage de la chaîne de coupe par pression s'effectue au moyen de crochets (46) montés articulés sur un axe (42A) de la chaîne situé le plus près possible d'une extrémité de la chaîne, de part et d'autre de la chaîne, et s'engageant sur un axe quelconque (42) de la chaîne de façon à court-circuiter un certain nombre de maillons.

4. Dispositif selon la revendication 1 ou la revendication 2, caractérisé en ce que le réglage de la chaîne de serrage s'effectue au moyen de crochets (46) montés articulés sur un axe (42A) de la chaîne situé le plus près possible d'une extrémité de la chaîne, de part et d'autre de la chaîne, et s'engageant sur un axe quelconque (42) de la chaîne de façon à court-circuiter un certain nombre de maillons.

## Claims

1. A tensioning device for chains and a set of interchangeable chains for cutting or clamping tubes, comprising a cylindrical rod (1) integral with a support (3) and a slide block (8) connected to the support (3) by links (26) and tensioning members (23) the lower portion of which is fashioned in the form of a hook to permit hooking onto the chain, the cylindrical rod (1) cooperating with a threaded sleeve (14), characterised in that, the tensioning members (23) are in the form of calipers and are articulated on the support (3) and connected by two links (26) to the slide block and in that the sleeve (14) cooperating with the threaded cylindrical rod, is constituted by at least one cylindrical portion which abuts at its lower end against the upper surface (12) of the slide block on which it can rotate and carries at its upper end four projections (29) serving for driving it with the aid of an arm (30, 33).

2. A device according to Claim 1, characterised in that, the sleeve (14) cooperates with an extension arm comprising at its lower portion four notches (32) disposed at 90°, or cooperates with an operating arm composed of a ratchet comprising four pins disposed at 90° and an arm (36) disposed perpendicularly with respect to the axis of the ratchet ; two projections (36a) disposed at 180° being provided at the upper portion of the ratchet.

3. A device according to Claim 1 or Claim 2, characterised in that, the adjustment of the chain cutting by pressure is effected by means of hooks (46) pivotally mounted on a pin (42a) of the chain situated as near as possible to one end of the chain, on both sides of the chain, and engaging with any pin (42) of the chain so as to short circuit a certain number of chain links.

4. A device according to Claim 1 or Claim 2, characterised in that, the adjustment of the gripping chain is effected by means of hooks (46) pivotally mounted on a pin (42a) of the chain situated as near as possible to one end of the chain, on both sides of the chain, and engaging with any pin (42) of the chain so as to short circuit a certain number of chain links.

## Ansprüche

1. Vorrichtung zum Spannen und Lockern von austauschbaren Ketten zum Schneiden oder Drücken von Rohren, mit einer zylindrischen Stange (1), die mit einem Träger (3) und einer mittels Schwingarmen (26) und Zwischenhebeln (23) mit dem Träger (3) verbundenen Führungsbacke fest verbunden ist, wobei der untere Bereich der Zwischenhebel (23) in Form eines Hakens zum Einhängen der Kette ausgebildet ist und wobei die zylindrische Stange (1) mit einer Gewindehülse (14) zusammenwirkt, dadurch gekennzeichnet, daß die Zwischenhebel (23) in Form eines Winkels ausgebildet und an dem Träger (3) angelenkt und mit der Führungsbacke (8) über die beiden Schwingarme (26) verbunden sind, und daß die mit der mit einem Gewinde versehenen zylindrischen Stange (1) zusammenwirkende Hülse (14) wenigstens einen zylindrischen Bereich aufweist, der sich an seinem unteren Ende gegen die obere Fläche (12) der Führungsbacke abstützt, auf der sich die Hülse verdrehen kann, und an ihrem oberen Ende vier Vorsprünge (29) trägt, die zum Antrieb mittels eines Armes (30, 33) dienen.

2. Vorrichtung nach Anspruch 1, dadurch gekennzeichnet, daß die Hülse (14) mit einer an ihrem unteren Teil vier um 90 Grad versetzt angeordnete Nuten aufweisenden Armverlängerung (30) oder mit einem Betätigungsarm zusammenwirkt, der aus einer vier um 90 Grad versetzte Sägezähne aufweisenden Ratsche und einem senkrecht bezogen auf die Ratschenachse angeordneten Arm (36) zusammengesetzt ist, und daß zwei um 180 Grad versetzte Vorsprünge (36A) am oberen Teil der Ratsche angeformt sind.

3. Vorrichtung nach Anspruch 1 oder 2, dadurch gekennzeichnet, daß die Einstellung der Druck-Schneidekette mittels Haken (46) erfolgt, die an einer Achse (42A) der Kette, die möglichst nahe an dem einen oder dem anderen Ende der Kette angeordnet ist, angelenkt sind und mit irgendeiner Achse (42) in Eingriff gebracht sind, derart, daß sie eine bestimmte Anzahl von Kettengliedern überbrücken.

4. Vorrichtung nach einem der Ansprüche 1 oder 2, dadurch gekennzeichnet, daß die Einstellung der Druckkette mittels Haken (46) bewirkt wird, die an einer Achse (42A) der Kette angelenkt sind, die möglichst an dem einen oder dem anderen Ende der Kette angeordnet ist, und mit irgendeiner Achse (42) der Kette in Eingriff bringbar sind, um eine bestimmte Anzahl von Kettengliedern zu überbrücken.

1/4

FIG.: 1

FIG.: 2

FIG.: 3A

FIG.: 3

4/4

FIG.:4

FIG.:5

FIG.:6